# EUROPEAN PATENT APPLICATION

(11) **EP 1 076 438 A2**
(43) Date of publication of application: **14.02.2001**
(21) Application number: 00116961.4
(22) Date of filing: 07.08.2000
(51) Int. Cl.: H04L 12/24, H04L 12/40

(54) **Log-in device and logged-in device**

(30) Priority: 12.08.1999 JP 22848599; 15.11.1999 JP 32397299
(71) Applicant: SEIKO EPSON CORPORATION, Shinjuku-ku, Tokyo 163-0811 (JP)
(72) Inventor: Nagasaka, Fumio, Suwa-shi, Nagano-ken 392-8502 (JP)
(74) Representative: Winter, Brandl, Fürniss, Hübner, Röss, Kaiser, Polte Partnerschaft

(57) **Abstract**

In the case of a series of connectionless transactions starting from a target, a management agent of the target writes an own GUID into a log-in inducement register provided in a common memory via an IEEE1394 bus, so as to induce an initiator to log in. A controller of the initiator checks the log-in inducement register. In the case where the GUID is written in the log-in inducement register, the controller determines that it has received an inducement of log-in and sends a log-in packet to the target with a view to logging in the target. The management agent receives the log-in packet and sends a status packet, which represents a response of accepted log-in, to the initiator. This arrangement of the present invention enables the data transmission starting from the target by the series of connectionless transactions.

## Description

### BACKGROUND OF THE INVENTION

### 1. Field of the Invention

The present invention relates to a techniques that causes a log-in device to log into a logged-in device. More specifically the present invention pertains to a technique that is preferably applied in the case of communication between a plurality of devices according to an SBP(serial bus protocol)-2 protocol in a system where the devices are mutually connected via an IEEE1394 bus.

### 2. Description of the Related Art

IEEE1394 is a serial bus standard proposed by IEEE and applied for transmission of digital data, and is defined by 'IEEE STD. 1394-1995 IEEE Standard for a High Performance Serial Bus'.

The SBP-2 protocol (hereinafter referred to as the SBP-2) is recommended for standardization by ANSI X3T10 in the United States and is a protocol of a transport layer designed in conformity with the IEEE1394 standard.

In a system where a plurality of devices are mutually connected via an IEEE1394 bus, in the case where the SBP-2 is applied for communication between the devices, the device having a common memory is called an initiator and the device without the common memory is called a target. The initiator requires logging into the target and establishing a right of using the target. In accordance with one concrete procedure, the initiator outputs a request of log-in to the target and receives a response of accepted log-in from the target.

In the SBP-2, a series of transactions discussed below is carried out when the initiator logs in the target.

The initiator first provides a special data structure called ORB (operation request block) on its own common memory and keeps the data, which are to be given to the target, in the ORB. In one example, the initiator is a computer and the target is a printer. In this case, the computer functioning as the initiator keeps the image data, which are to be printed by the printer functioning as the target, in a specific part of the common memory space and stores an address pointer, which represents the specific part, at a predetermined position in the ORB. This arrangement enables the initiator to carry out the required processing at the highest possible speed, regardless of the state of the target. The target, on the other hand, successively takes in the ORBs, which are placed on the common memory of the initiator, and works to process the contents in the ORBs. The printer functioning as the target takes in and processes a next set of image data immediately after the printer has completed printing a certain set of image data to provide some vacancy in its own memory. The printer accordingly continues printing without any rest and processes the jobs at the highest possible efficiency.

When the use of the target is concluded, the initiator logs out of the target and discards the right of using the target. In accordance with one concrete procedure, the initiator outputs a request of log-out to the target and receives a response of accepted log-out from the target.

In the system where devices are connected via a network or a bus, the most typical work of the upper layer protocol included in the configuration of communication protocols finds a specific device that provides a desired service, and makes a connection with the specific device.

In order to find the specific device that provides a service, the upper layer protocol sends a communication packet without specifying the partner of communication. For this purpose, the upper layer protocol adopts a unicast method that asks nodes in succession if the service is available. The concrete procedure successively specifies one of the nodes as the partner of communication and sends only one packet to the specified partner of communication. Namely a temporary connection is made to send one packet. Such communication is referred to as connectionless communication.

After finding the specific device that is able to provide the service, the upper layer protocol keeps the connection with the specific device. The protocol then specifies the specific device as the partner of communication and sends a number of communication packets to the specified partner of communication. Such communication that establishes a connection with the partner of communication and enables transmission of a large number of packets is referred to as connected communication.

Commands are transmitted from the upper layer protocol to the lower layer protocol via an interface called a service provider interface (SPI). Socket, which is a type of the SPI, requires specification of a communication partner, in order to implement the connectionless communication discussed above. For example, a command like "Send To Node X" is output to transmit data to a node X, and a command like " Receive From Node X" is output to receive data from the node X. In the case of connected communication, on the other hand, the connection is established and the communication partner has already been specified. The connected communication is thus implemented by simply outputting a command "Send" or "Receive" without the specification of the communication partner.

In the case where the lower layer protocol is the SBP-2 described above, a series of transactions discussed below is carried out in response to the output of such a command.

In the case of a series of connected transactions corresponding to the connected communication, the initiator logs in the target, which is the specified partner of communication, and keeps the connection with the target until the initiator logs out. While the connection is established, the initiator sets the ORB to an output mode, in order to cause the target to process a desired set of data. This action corresponds to the command "Send". The initiator sets the ORB to an input mode, in order to cause the target to write a desired set of data into the initiator. This action corresponds to the command "Receive".

In the case of a series of connectionless transactions corresponding to the connectionless communication, on the other hand, since the SBP-2 is the connection oriented protocol, the initiator carries out a series of actions, that is, specifying the target as the partner of communication, logging in the target, setting the ORB to an output mode in order to cause the target to process a desired set of data, and logging out of the target. This series of actions, the log-in, the ORB (set to the output mode), and the log-out, corresponds to the command "Send To ". The initiator also carries out another series of actions, that is, specifying the target as the partner of communication, logging in the target, setting the ORB to an input mode in order to cause the target to write a desired set of data into the initiator, and logging out of the target. This series of actions, the log-in, the ORB (set to the input mode), and the log-out, corresponds to the command "Receive From ".

Here it is assumed that there are two nodes, that is, a first node and a second node. The SPI is designed to enable the second node to start sending and receiving data to and from the first node, while enabling the first node to start sending and receiving data to and from the second node. Namely the SPI is designed to ensure symmetry of communication.

In the case of the series of connected transactions according to the SBP-2, the connection is established between the initiator and the target. This enables data transmission starting from either the initiator or the target. Namely the symmetry of communication is ensured.

In the case of the series of connectionless transactions according to the SBP-2, however, the data transmission starting from the initiator is allowed, whereas the data transmission starting from the target is not allowed. This is ascribed to the asymmetry of the SBP-2. Only the initiator can log in and log out of the target, while the target should wait for the initiator logging in and logging out.

As discussed above, the conventional technique does not allow the target to log in the initiator. The target should wait for the initiator logging in It is accordingly impossible to implement data transmission starting from the target by a series of connectionless transactions.

### SUMMARY OF THE INVENTION

The object of the present invention is thus to provide a device and a method that enable data transmission starting from a target by a series of connectionless transactions.

At least part of the above and the other related objects is attained by a log-in device that logs in a specific device via a predetermined communication path. The log-in device includes a log-in unit that logs in the specific device in response to an inducement of log-in from the specific device.

In one embodiment of the present invention, the specific device and the log-in device are respectively a target and an initiator in the SBP-2. The log-in unit causes the initiator to log in the target in response to an inducement of log-in from the target. When the initiator logs in the target, the target can start transmission of data to and from the initiator. In this arrangement, the target induces the initiator to log in and thereby enables transmission of data. This arrangement accordingly ensures data transmission starting from the target by a series of connectionless transactions.

The present invention is also directed to a logged-in device that is logged in by a specific device via a predetermined communication path. The logged-in device includes a log-in inducement unit that induces the specific device to log in when desiring a log-in from the specific device.

In one embodiment of the present invention, the specific device and the logged-in device are respectively an initiator and target in the SBP-2. The log-in inducement unit causes the target to induce the initiator to log in when the target desires a log-in from the initiator. When the initiator logs in the target in response to the inducement of log-in output from the target to the initiator, the target can start transmission of data to and from the initiator. This arrangement accordingly ensures data transmission starting from the target by a series of connectionless transactions.

The present invention is further directed to an inter-device communication system, where a log-in device logs in a logged-in device via a predetermined communication path. The logged-in device includes a log-in inducement unit that induces the log-in device to log in when desiring a log-in from the log-in device, and the log-in device includes a log-in unit that logs in the logged-in device in response to the inducement of log-in from the logged-in device.

In one embodiment of the present invention, the log-in device and the logged-in device are respectively an initiator and a target in the SBP-2. The log-in inducement unit causes the target to induce the initiator to log in when the target desires a log-in from the initiator. The log-in unit causes the initiator to log in the target in response to the inducement of log-in from the target. When the initiator logs in the target, the target can start transmission of data to and from the initiator. In this arrangement, the target induces the initiator to log in and thereby enables transmission of data. This arrangement accordingly ensures data transmission starting from the target by a series of connectionless transactions.

The present invention is also directed to a method of controlling log-in, so as to cause a log-in device to log in a logged-in device via a predetermined communication path. The method includes the steps of: (a) causing the logged-in device to induce the log-in device to log in when desiring a log-in from the log-in device; and (b) causing the log-in device to log in the logged-in device in response to the inducement of log-in from the logged-in device.

In one embodiment of the present invention, the log-in device and the logged-in device are respectively an initiator and a target in the SBP-2. According to the method of the present invention, the initiator logs in the target in response to the inducement of log-in output from the target to initiator. The target can then start transmission of data to and from the initiator. This arrangement accordingly ensures data transmission starting from the target by a series of connectionless transactions.

The present invention is also directed to a first computer program product that causes a computer to carry out a series of log-in processing, the computer logging in a specific device via a predetermined communication path. The first computer program product includes: a program code that causes the computer to log in the specific device in response to an inducement of log-in from the specific device; and a computer readable medium, in which the program code is stored.

In the specification hereof, the computer may be any of personal computers, mobile computers, information processing terminals, work stations, a variety of other computers, a diversity of peripheral equipment that practically have the functions of the computer, such as printers, copying machines, and interface switching devices, and a variety of domestic and business equipment that practically have the functions of the computer, such as audio equipment and video equipment. In the embodiments discussed later, however, the term 'computer' may be used in a narrower sense and represent a personal computer or another equivalent computer.

The computer executes the program code to actualize the functions similar to those of the log-in unit included in the log-in device of the present invention. The first computer program product accordingly exerts the same effects as those of the log-in device discussed above.

The present invention is further directed to a second computer program product that causes a computer to carry out a series of logged-in processing, the computer being logged in by a specific device via a predetermined communication path. The second computer program product includes: a program code that causes the computer to induce the specific device to log in when desiring a log-in from the specific device; and a computer readable medium, in which the program code is stored.

The computer executes the program code to actualize the functions similar to those of the log-in inducement unit included in the logged-in device of the present invention. The second computer program product accordingly exerts the same effects as those of the logged-in device discussed above.

The principle of the present invention may be attained by a variety of applications, for example, the log-in device, the logged-in device, the inter-device communication system, and the method of controlling the log-in discussed above, as well as computer programs that construct any of such devices, recording media in which the computer programs are recorded, and data signals that include the computer programs and are embodied in carriers.

These and other objects, features, aspects, and advantages of the present invention will become more apparent from the following detailed description of the preferred embodiment with the accompanying drawings.

### BRIEF DESCRIPTION OF THE DRAWINGS

Fig. 1 is a block diagram illustrating the structure of an initiator and a target in a first embodiment according to the present invention;
Fig. 2 is a block diagram illustrating an inter-device communication system including the initiators and the target shown in Fig. 1;
Fig. 3 is a block diagram showing the hardware configuration of a computer and a printer respectively functioning as the initiator and the target shown in Fig. 1;
Fig. 4 is a flowchart showing a processing routine of log-in inducement executed by the target shown in Fig. 1;
Fig. 5 is a flowchart showing a processing routine of responding to the log-in inducement executed by the initiator shown in Fig. 1;
Fig. 6A and 6B are timing charts showing a series of connectionless transactions that is accompanied with an inducement of log-in and carried out between the initiator and the target shown in Fig. 1;
Fig. 7 is a block diagram illustrating the structure of an initiator and a target in a second embodiment according to the present invention;
Fig. 8 is a flowchart showing a processing routine of log-in inducement executed by the target shown in Fig. 7;
Fig. 9 is a flowchart showing a processing routine of responding to the log-in inducement executed by the initiator shown in Fig. 7;
Fig. 10 is a block diagram illustrating the structure of an initiator and a target in a third embodiment according to the present invention;
Fig. 11 is a flowchart showing a processing routine of log-in inducement executed by the target shown in Fig. 10; and
Fig. 12 is a flowchart showing a processing routine of responding to the log-in inducement executed by the initiator shown in Fig. 10.

### DESCRIPTION OF THE PREFERRED EMBODIMENTS

Some modes of carrying out the present invention are described below in the following sequence as preferred embodiments of the present invention.
1. Outlines of IEEE1394 Bus and SBP-2
   1-1. Outlines of IEEE1394 Bus
   1-2. SBP-2
2. First Embodiment
   2-1. Structure of First Embodiment
   2-2. Operation of First Embodiment
   2-3. Effects of First Embodiment
3. Second Embodiment
   3-1. Structure of Second Embodiment
   3-2. Operation of Second Embodiment
   3-3. Effects of Second Embodiment
4. Third Embodiment
   4-1. Structure of Third Embodiment
   4-2. Operation of Third Embodiment
   4-3. Effects of Third Embodiment
5. Other Applications

### 1. Outlines of IEEE1394 Bus and SBP-2

Prior to the description of the embodiments, the outlines of an IEEE1394 bus and an SBP-2 are explained.

### 1-1. Outlines of IEEE1394 Bus

The IEEE1394 bus is obtained by serializing processor buses having an address space of 64 bits on an identical signal line. The transfer speed of the IEEE1394 bus is 400 MHz so far, but is expected in future to rise to 3.2 GHz at the maximum. The IEEE1394 bus is basically similar to conventional processor buses used on a mother board of a computer, but supports a massive memory space by a single signal line.

The IEEE1394 bus is not used exclusively for one processor but connects a plurality of processors with one another. This is equivalent to allocation of the memory space occupied by one bus into the plurality of processors. The plurality of processors commonly use one signal path. This attains a situation very similar to a network.

A plurality of computers can be connected to one IEEE1394 bus. Further connection of a printer to the IEEE1394 bus enables the plurality of computers to share the printer. This is regarded as a small-sized network.

Unlike the general network, however, the IEEE1394 bus follows the design of the processor buses and basically enables management of requests output from the respective processors without any collision. This mechanism is called bus arbitration. On the IEEE1394 bus during data transfer, the bus arbitration allows only one node (in this case, one computer) to execute the data transfer. In other words, when a certain node occupies the IEEE1394 bus, the control prohibits the other nodes from using the bus in the same cycle time (125 µms). The IEEE1394 bus accordingly does not require the technique of exclusive resource control applied in the general network, for example, detection of carriers or detection of collisions (collisions of packets).

### 1-2. SBP-2

The SBP-2 is, on the other hand, designed on a connection basis. Namely a host device that demands the use of a certain target of the SBP-2 should be designed as an initiator of the SBP-2. The initiator gives a request of log-in to the target and establishes a right of using the target only in the case of accepted log-in. More precisely the initiator requires a log-in with regard to each logical unit included in the target. For the clarity of explanation, however, it is assumed that the initiator simply gives a request of log-in to the target. Even if there is only one target corresponding to a plurality of initiators, only the initiator with the accepted log-in can utilize the target at the moment. This arrangement enables the plurality of initiators to share the target.

In the SBP-2, the initiators are connected with the targets via the IEEE1394 bus. The IEEE1394 bus enables the targets to read and write data from and into the memories of the initiators. As mentioned previously, in the SPB-2, the devices having common memories are called the initiators, while the devices without the common memory are called the targets. It is unnecessary that both the initiators and the targets have common memories. Namely it is sufficient that only the initiators have common memories. Each of the initiators has a common memory as part of its own memory and accordingly enables data to be read and written by the local access. Each of the targets, on the other hand, uses part of the memory owned by the initiator as the common memory and is required to read and write data by the remote access. The roles of the respective devices as the initiators and the targets are determined at the initial stage of the design process. In general, the host devices, such as the computers, are defined as the initiators, and the devices, such as the printer and the scanner, are defined as the targets. These roles are fixed and are not changed in principle, although some design may allow the role of one device to be changed over between the target and the initiator, for example, with a switch.

The conventional network carries out the push-type control, where the initiator polls the state of the target and sends a command when the target is ready for the acceptance of the request. The SBP-2, on the other hand, carries out the pull-type control, where the initiator keeps a command and data, which are to be given to the target, in its own memory space and the target takes in the command and the data for the processing at its convenient timing that ensures the processing. This arrangement of the SBP-2 enhances the total efficiency of the transaction.

### 2. First Embodiment

### 2-1. Structure of First Embodiment

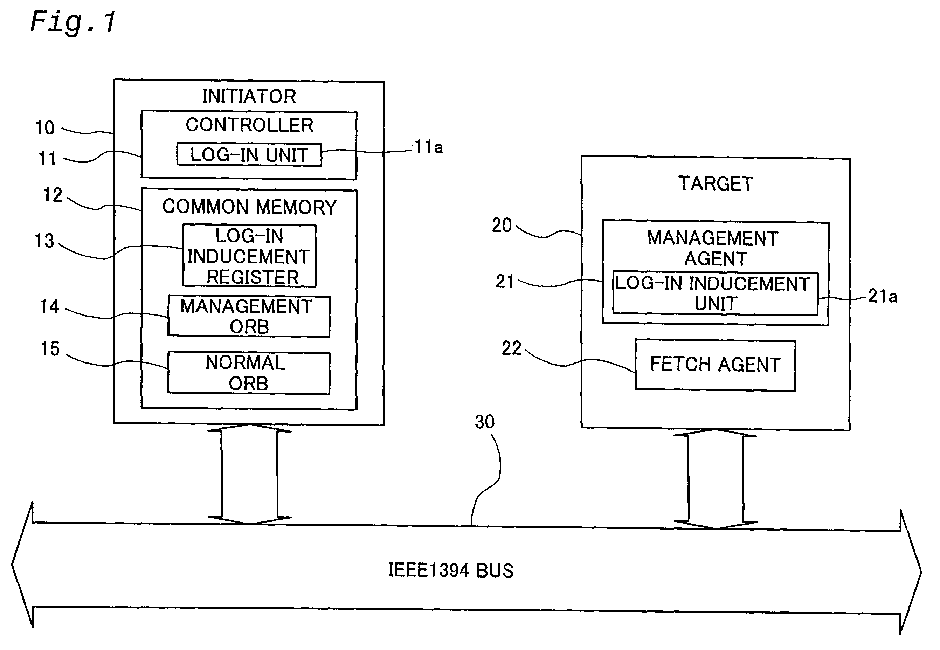

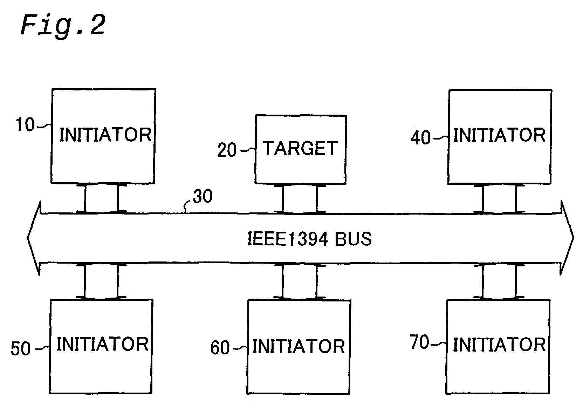

Based on the principles of the IEEE1394 bus and the SBP-2 discussed above, a first embodiment according to the present invention is described below with the drawings. Fig. 1 is a block diagram illustrating the structure of an initiator and a target in the first embodiment of the present invention. Fig. 2 is a block diagram illustrating an inter-device communication system including the initiators and the target shown in Fig. 1. In the inter-device communication system of Fig. 2, the respective devices are connected via an IEEE1394 bus 30 and communicate according to the SBP-2 protocol. The devices connected to the IEEE1394 bus 30 include initiators 10 and 40 through 70 having common memories and a target 20 without the common memory. In this embodiment, the initiators 10 and 40 through 70 are computers, and the target 20 is a printer.

The initiators 10 and 40 through 70 have an identical structure, and the structure of the initiator 10 is accordingly described as a representative with the drawing of Fig. 1. The initiator 10 includes a controller 11 and a common memory 12. The common memory 12 has a log-in inducement register 13 and special data structures, such as a management ORB 14 and a normal ORB 15, according to the requirements. The controller 11 has a log-in unit 11a.

The target 20 includes a management agent 21 that receives a request of log-in or log-out from the initiator and gives an appropriate response to the initiator, and a fetch agent 22 that transmits data to and from the initiator, which has gained the log-in. The management agent 21 has a log-in inducement unit 21a.

The target actually includes at least one logical unit, and the management agent and the fetch agent are provided for each logical unit. For the clarity of explanation, however, the logical units are omitted from the illustrated structure of the embodiment.

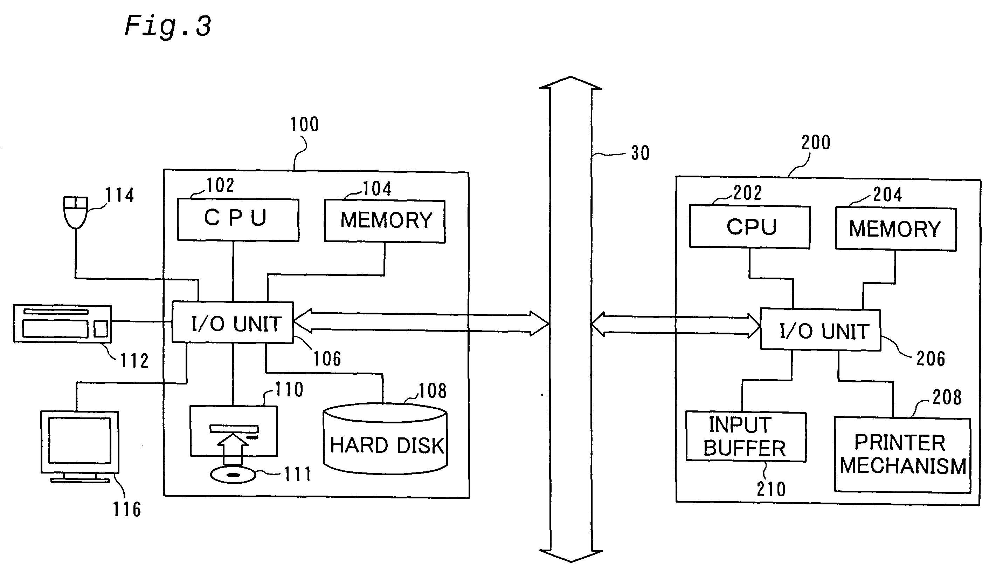

Fig. 3 is a block diagram showing the hardware configuration of a computer and a printer respectively functioning as the initiator and the target shown in Fig. 1.

As shown in Fig. 3, the computer 100 functioning as the initiator includes a CPU 102 that executes a diversity of processes and controls according to computer programs, and a memory 104, in which the computer programs are stored and data obtained in the course of the processing are temporarily registered. The computer 100 further includes an I/O unit 106 that is in charge of data transmission between the CPU 102 and the variety of peripheral devices and the IEEE1394 bus 30, a hard disk 108, in which a diversity of data are stored, and a CD-ROM drive 110. A keyboard 112 and a mouse 114 used for inputting user's instructions and a monitor 116 used for displaying data are connected externally to the computer 100.

The CPU 102 reads and executes a desired computer program stored in the memory 104, thereby functioning as the controller 11 shown in Fig. 1. A part of the memory 104 is allocated to the common memory 12 shown in Fig. 1.

The printer 200 functioning as the target includes a CPU 202 that executes a diversity of processes and controls according to computer programs, and a memory 204, in which the computer programs are stored and data obtained in the course of the processing are temporarily registered. The printer 200 further includes an I/O unit 206 that is in charge of data transmission between the CPU 202 and the variety of peripheral devices and the IEEE1394 bus 30, a printer mechanism 208 that carries out a printing operation to print an image on printing paper in response to an instruction from the CPU 202, and an input buffer 210, in which print data are temporarily registered.

The CPU 202 reads and executes a desired computer program stored in the memory 204, thereby functioning as the management agent 21 and the fetch agent 22 shown in Fig. 1.

In this embodiment, the computer programs stored in the memory 104 of the computer 100 are provided in the form of being recorded in a CD-ROM 111 as a recording medium and read by the CD-ROM drive 110 to be taken into the computer 100. The input computer programs are transferred to the hard disk 108 and further transferred to the memory 104 according to the requirements, for example, at the time of activation. The input computer programs may alternatively be transferred to the memory 104 not via the hard disk 108 but directly.

In the printer 200, on the other hand, a part of the memory 204 is constructed as a ROM. The computer programs for the printer 200 are stored in the ROM and provided in the form of being recorded in the ROM chip. The part of the memory 104 may alternatively be constructed as a rewritable non-volatile memory, instead of the ROM. In this alternative structure, the computer programs for the printer 200 are provided in the form of being recorded in the CD-ROM 111. The computer programs are read by the CD-ROM drive 110 of the computer 100 and transferred to the printer 200 via a network (not shown) to be written into the non-volatile memory.

In this embodiment, the CD-ROM and the ROM are used as the recording media, in which the computer programs are recorded in a computer readable manner. Other examples of the available recording medium include flexible disks, magneto-optic discs, IC cards, ROM cartridges, punched cards, prints with barcodes or other codes printed thereon, internal storage devices (memories like a RAM) and external storage devices of the computer, and a diversity of other computer readable media.

The computer programs may otherwise be taken into the computer 100 or the printer 200 from a program server (not shown) that is accessed via a network and works as a supplier of computer programs.

Part of the computer programs may be incorporated in the operating system.

### 2-2. Operation of First Embodiment

The system of this embodiment works in the following manner. In this example, the printer functioning as the target 20 downloads a font from the computer functioning as the initiator and carries out printing (font download printing). For the clarity of explanation, it is assumed that the target 20 is a printer 'a' and the initiators 10 and 40 through 70 are computers A and B through E, respectively.

In order to gain a service of downloading a font, the printer 'a' as the target 20 is required to find a specific computer that provides the service. For this purpose, the printer 'a' asks the computers A through E in succession if the service is available (the unicast method). In accordance with a concrete procedure, the printer 'a' successively specifies one of the computers as a partner of communication, makes a temporary connection with the specified computer, and transmits one packet to the specified computer. This corresponds to the connectionless communication.

For the connectionless communication, in the printer 'a', commands are transmitted from an upper layer protocol to a lower layer protocol, that is, the SBP-2, via a service provider interface (SPI). For example, a command like "Send To Computer A" is transmitted to specify the computer A as a partner of communication and ask the computer A if the service of downloading the font is available. A command like "Receive From Computer A" is also transmitted to make the computer A return its status.

As described previously, in the SBP-2, the printer 'a' works as the target 20 and the computer A works as the initiator 10. In response to the output of such commands to the SBP-2, a series of connectionless transactions that is accompanied with an inducement of log-in and starts from the target 20, is carried out between the target 20 and the initiator 10, which is specified as the partner of communication.

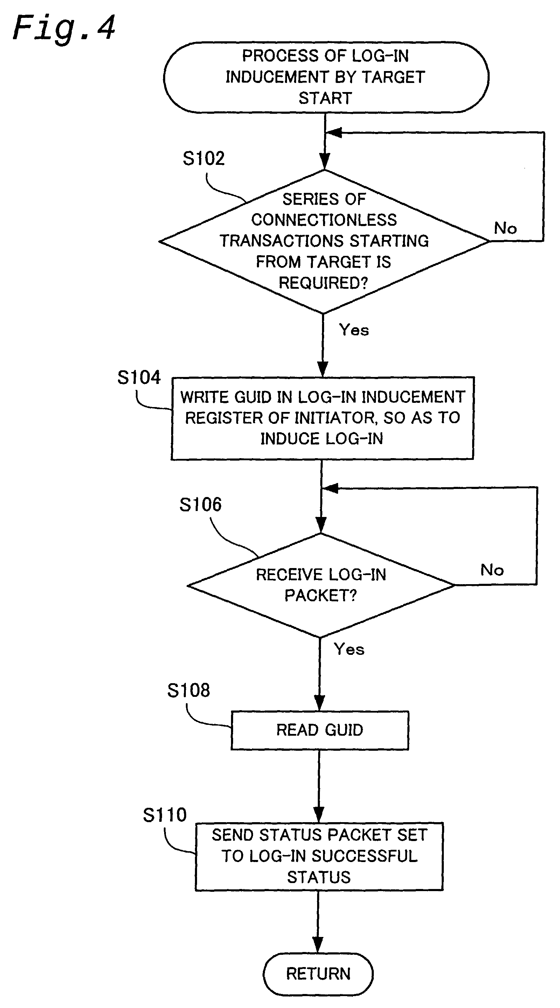

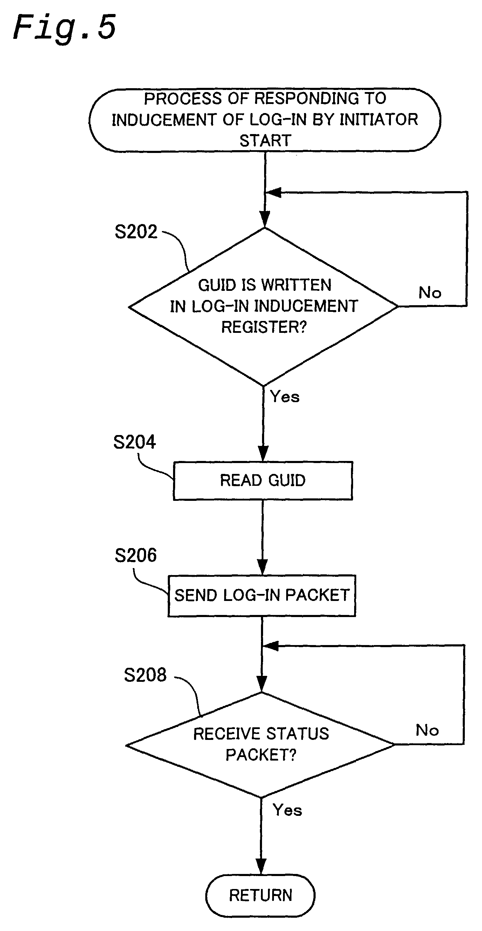

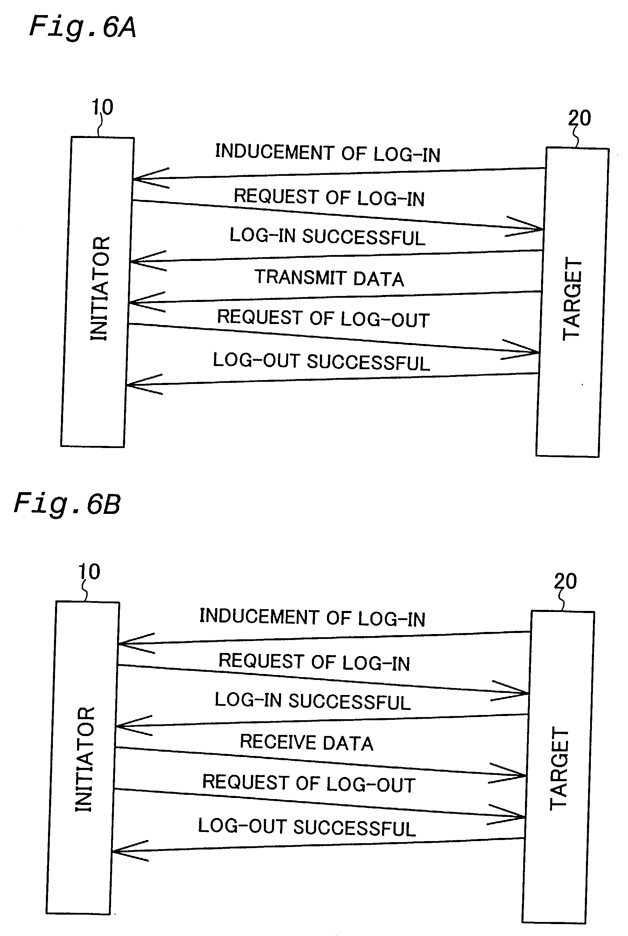

Fig. 4 is a flowchart showing a processing routine of log-in inducement executed by the target shown in Fig. 1. Fig. 5 is a flowchart showing a processing routine of responding to the log-in inducement executed by the initiator shown in Fig. 1. Fig. 6A and 6B are timing charts showing a series of connectionless transactions that is accompanied with an inducement of log-in and carried out between the initiator and the target shown in Fig. 1.

Fig. 6A shows a series of connectionless transactions in response to output of the command "Send To Computer A" to the target. Fig. 6B shows a series of connectionless transactions in response to output of the command "Receive From Computer A" to the target. In both Figs. 6A and 6B, the series of transactions is arranged in time series from the top to the bottom.

Referring to the flowchart of Fig. 4, when the target 20 receives one of such commands, the management agent 21 included in the target 20 determines that it is necessary to carry out a series of connectionless transactions starting from the target 20 at step S102, and induces the initiator 10 to log in. In accordance with one concrete procedure, the log-in inducement unit 21a included in the management agent 21 gains access to the initiator 10 via the IEEE1394 bus 30 and writes a GUID of the target 20 into the log-in inducement register 13 provided in the common memory 12 of the initiator 10, so as to induce a log-in at step S104. The GUID here stands for the Global Unique Identification and represents an identification code that is intrinsic to each of the initiators and the targets. The GUID is allocated as a unique identification code only one in the world to each device constructed as the initiator or the target in its design stage. In the case where the target 20 has the GUID equal to '20', for example, the management agent 21 writes the GUID '20' into the log-in inducement register 13 included in the initiator 10.

The controller 11 of the initiator 10 then starts the processing routine shown in the flowchart of Fig. 5 and determines whether or not the initiator 10 has received an inducement of log-in. In accordance with one concrete procedure, the log-in unit 11a included in the controller 11 checks the log-in inducement register 13 provided in the common memory 12 and determines whether or not the GUID is written in the log-in inducement register 13 at step S202, so as to determine whether or not the initiator 10 has received an inducement of log-in.

In the case where no GUID is written in the log-in inducement register 13, the log-in unit 11a of the controller 11 determines that the initiator 10 has not yet received the inducement of log-in and stands by for the input of a GUID. In the case where the GUID is written in the log-in inducement register 13, on the other hand, the log-in unit 11a determines that the initiator 10 has received the inducement of log-in and reads the GUID written in the log-in inducement register 13 at step S204. The log-in unit 11a of the controller 11 accordingly specifies the target that currently carries out the inducement of log-in, based on the read GUID. Since the read GUID is '20' at this moment, the target 20 is specified as the target that currently carries out the inducement of log-in.

After the specification of the target 20 that currently carries out the inducement of log-in, the log-in unit 11a of the controller 11 sends a log-in packet to the target 20 at step S206, with a view to logging in the target 20. The log-in packet includes a request of log-in for requiring the target 20 to accept a log-in and the GUID of the initiator 10. In the case where the initiator 10 has the GUID equal to '10', for example, the GUID '10' is included in the log-in packet.

Referring back to the flowchart of Fig. 4, after carrying out the inducement of log-in at step S104, the management agent 21 of the target 20 stands by for the input of a log-in packet at step S106. When receiving a packet, the management agent 21 determines whether or the input packet includes a request of log-in. In the case where the request of log-in is included in the input packet, the management agent 21 identifies the input packet as a log-in packet and reads the GUID included in the input log-in packet at step S108. The management agent 21 then specifies the initiator that has just sent the log-in packet based on the read GUID, and compares the specified initiator with the initiator that has carried out the inducement of log-in for the purpose of identification. Here '10' is read as the GUID at step S108, and it is thus determined that the initiator 10 that has just sent the log-in packet is identical with the initiator 10 that has carried out the inducement of log-in.

When it is determined that the initiator that has just given the request of log-in is identical with the initiator that has carried out the inducement of log-in, the management agent 21 sends a status packet, which is set to a log-in successful status, to the initiator 10 that has just given the request of log-in at step S110. The log-in successful status represents a response of accepted log-in. After sending the status packet, the management agent 21 concludes the series of the processing shown in the flowchart of Fig. 4.

Referring back to the flowchart of Fig. 5, the controller 11 of the initiator 10 stands by for the input of a status packet at step S208 after sending the log-in packet at step S206. The controller 11 receives the status packet sent from the target 20 and reads the status specified in the input status packet. In the case where the status specified in the status packet is the log-in successful status, which represents the response of accepted log-in, the controller 11 concludes the series of the processing shown in the flowchart of Fig. 5.

The series of the processing discussed above enables the target 20 to be logged by the initiator 10.

In this embodiment, the initiator 10 sends the log-in packet to the target 20, whereas the target 20 sends the status packet to the initiator 10. These operations are discussed more in detail.

Referring back to Fig. 1, the initiator 10 has the common memory 12. The initiator 10 sends the log-in packet to the target 20 in the following manner. The initiator 10 first locates the data of the log-in packet, which are to be output to the target 20, on its own common memory 12 in the form of the specific data structure called the management ORB 14 as shown in Fig. 1. The initiator 10 then sends a pointer representing an address on the common memory 12, at which the specific data structure is placed, to the management agent 21 of the target 20 via the IEEE1394 bus 30. The management agent 21 of the target 20 receives the pointer, gains access to the common memory 12 of the initiator 10, which has just sent the pointer, via the IEEE1394 bus 30, and takes in the management ORB 14 placed at the address specified by the pointer, so as to receive the data of the log-in packet. In this manner, the initiator 10 sends the log-in packet to the target 20.

In response to the input of the log-in packet, the target 20 sends the status packet to the initiator 10. The log-in packet sent from the initiator 10 includes the pointer, which specifies the address on the common memory 12 of the initiator 10, in addition to the request of log-in and the GUID. When receiving the log-in packet, the management agent 21 of the target 20 reads the pointer included in the input packet, gains access to the common memory 12 of the initiator 10 via the IEEE1394 bus 30, and writes the data of the status packet into STATUS_FIFO (not shown) specified by the pointer. In this manner, the target 20 remote writes the status packet into the initiator 10.

When the initiator 10 logs in the target 20, the target 20 then transmits data of one packet to or from the initiator 10. At this moment, the main part of the processing shifts from the management agent 21 to the fetch agent 22 in the target 20. The fetch agent 22 is actually in charge of transmitting data of one packet to or from the controller 11 of the initiator 10.

In the case where the command like "Send To Computer A" is sent to the target 20, the fetch agent 22 sends a desired set of data (for example, data for asking if a service of downloading a font is available) to the initiator 10 as shown in Fig. 6A. In the case where the command like "Receive From Computer A" is sent to the target 20, on the other hand, the fetch agent 22 receives a desired set of data (for example, status data representing whether or not the service of downloading the font is available) from the initiator 10 as shown in Fig. 6B.

These operations actually follow the concrete procedure discussed below. The fetch agent 22 sends the data to the initiator 10 in the following manner. The initiator 10 first sets the normal ORB 15 shown in Fig. 1 to an input mode and places the normal ORB 15 on its own common memory 12. The fetch agent 22 gains access to the common memory 12 of the initiator 10 via the IEEE1394 bus 30 and writes the data, which are to be sent to the initiator 10, in the normal ORB 15. This arrangement enables the data to be remote written from the target 20 to the initiator 10.

The fetch agent 22 receives the data from the initiator 10 in the following manner. The initiator 10 first sets the normal ORB 15 to an output mode, places the normal ORB 15 on the common memory 12, and writes the data, which are to be received by the target 20, in the normal ORB 15. The fetch agent 22 gains access to the common memory 12 of the initiator 10 and takes in the normal ORB15, so as to receive the data kept therein. This arrangement enables the data to be remote read from the initiator 10 by the target 20.

After the target 20 transmits data of one packet to or from the initiator 10, the initiator 10 logs out of the target 20. At this moment, the main part of the processing returns from the fetch agent 22 to the management agent 21 in the target 20. The controller 11 of the initiator 10, in combination with the management agent 21 of the target 20, carries out the processing of log-out as discussed below.

In the process of logging-out, the controller 11 of the initiator 10 first sends a log-out packet to the target 20. The log-out packet includes a request of log-out for requiring the target 20 to accept a log-out and the GUID of the initiator 10.

When receiving a packet, the management agent 21 of the target 20 determines whether or not the input packet includes a request of log-out. In the case where the request of log-out is included in the input packet, the management agent 21 identifies the input packet as a log-out packet and reads the GUID included in the input log-out packet. The management agent 21 then specifies the initiator that has just sent the log-out packet, based on the read GUID. The management agent 21 subsequently sends a status packet, which is set to a log-out successful status, to the initiator 10 that has just given the request of log-out. The log-out successful status represents a response of accepted log-out.

This completes the series of transactions in response to the command like "Send To Computer A" or the command like "Receive From Computer A" given to the target 20. In the connectionless transactions, one series of actions, that is, inducing a log-in, logging in, transmitting data (the ORB set to the input mode), and logging out, corresponds to the command "Send To " as shown in Fig. 6A. Another series of actions, that is, inducing a log-in, logging in, receiving data (the ORB set to the output mode), and logging out, corresponds to the command "Receive From " as shown in Fig. 6B.

In a similar manner, the printer 'a' or the target 20 asks the computers B through E or the initiators 40 through 70 in succession if the service of downloading the font is available and receives the status sent from the respective computers B through E according to the series of connectionless transactions discussed above. This arrangement enables the printer 'a' to find the computer that provides the service.

### 2-3. Effects of First Embodiment

As described above, in the technique of this embodiment, the target 20 induces the initiator 10 to log in. When the initiator 10 logs in the target 20, the target 20 starts sending or receiving data to or from the initiator 10. The arrangement of the embodiment thus enables data transmission starting from the target 20 by the series of connectionless transactions and ensures the symmetry of communication.

In the structure of the embodiment, the common memory 12 of the initiator 10 has the log-in inducement register 13. The target 20 writes its own GUID into the log-in inducement register 13, so as to implement the inducement of log-in. This arrangement enables the initiator 10 to readily and securely recognize the action of the target 20 that induces a log-in.

### 3. Second Embodiment

### 3-1. Structure of Second Embodiment

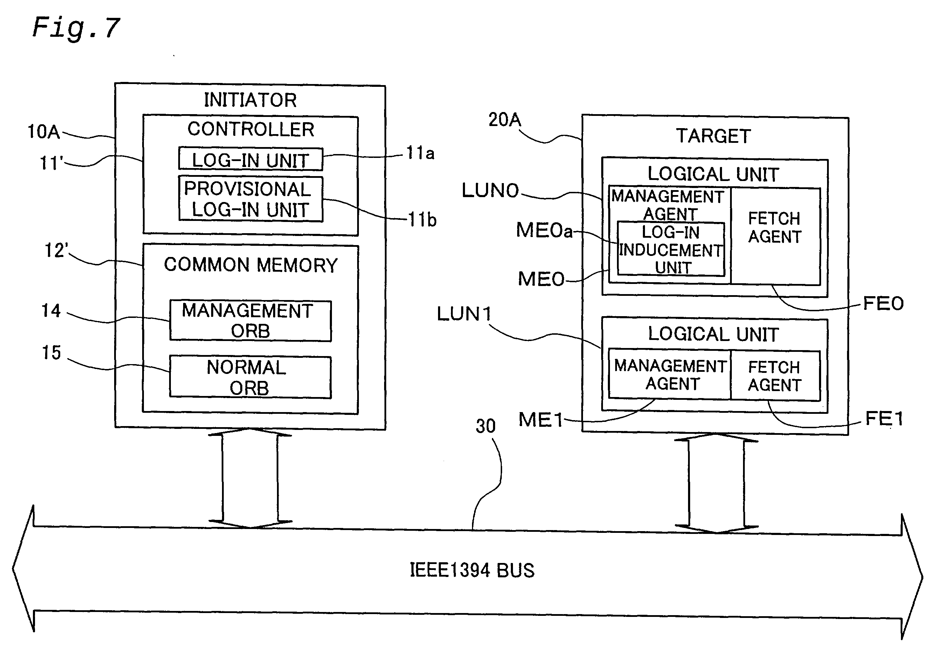

Fig. 7 is a block diagram illustrating the structure of an initiator and a target in a second embodiment according to the present invention. The like numerals in Fig. 7 denote the like elements shown in Fig. 1.

Referring to Fig. 7, an initiator 10A of the second embodiment has a controller 11' and a common memory 12' like the initiator 10 shown in Fig. 1. Unlike the initiator 10 shown in Fig. 1, however, the common memory 12' included in the initiator 10A does not have the log-in inducement register 13. The controller 11' of the second embodiment has a provisional log-in unit 11b, in addition to the log-in unit 11a.

While the logical units, which are actually included in the target 20, are omitted from the illustration of Fig. 1, a target 20A of the second embodiment has logical units LUN0 and LUN1. The logical units LUN0 and LUN1 respectively have management agents ME0 and ME1 and fetch agents FE0 and FE1. The logical unit LUN1 is an ordinary logical unit that provides a normal service, whereas the logical unit LUN0 is an auxiliary logical unit that is utilized when the target 20A induces the initiator 10A to log in. More concretely, the logical unit LUN0 specifically carries out only reply of the status. The management agent ME0 in the logical unit LUN0 has a log-in inducement unit ME0a.

These logical units LUN1 and LUN0 are respectively present on a unit directory (not shown) included in a configuration ROM (not shown) in the target 20A.

### 3-2. Operation of Second Embodiment

The operation of the second embodiment is carried out on the same premises as those of the first embodiment shown in Fig. 1. In the second embodiment, the target 20A is a printer 'a' and the initiator 10A is a computer A. The printer 'a' functioning as the target 20A makes connectionless communication with each computer functioning as the initiator, in order to find a specific computer that provides a service of downloading a font.

In the arrangement of the second embodiment, the respective initiators including the initiator 10A give a request of provisional log-in to the auxiliary logical unit LUN0 included in the target 20A at preset time intervals.

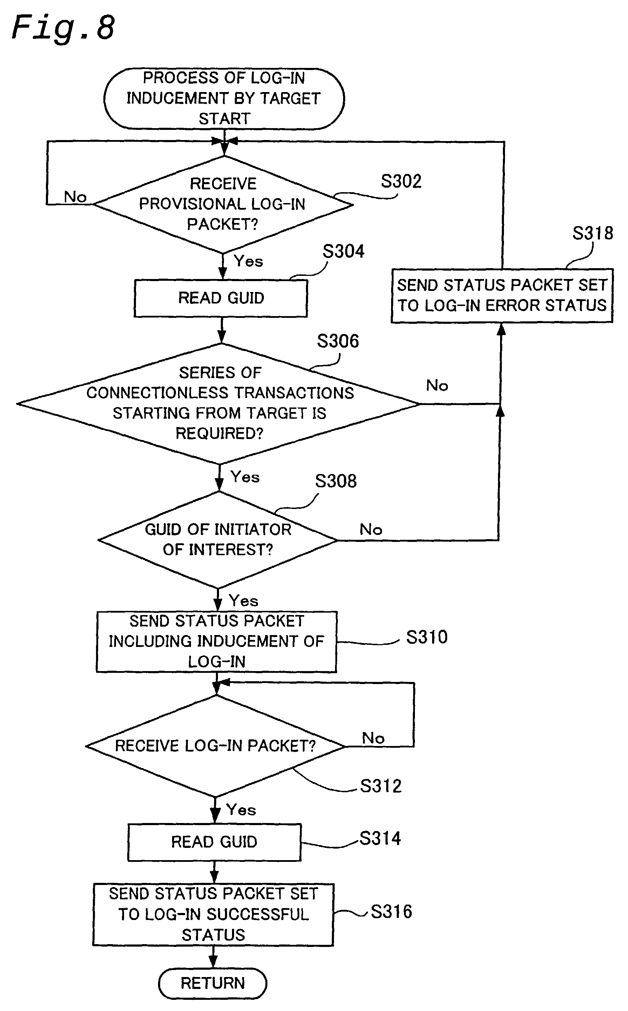

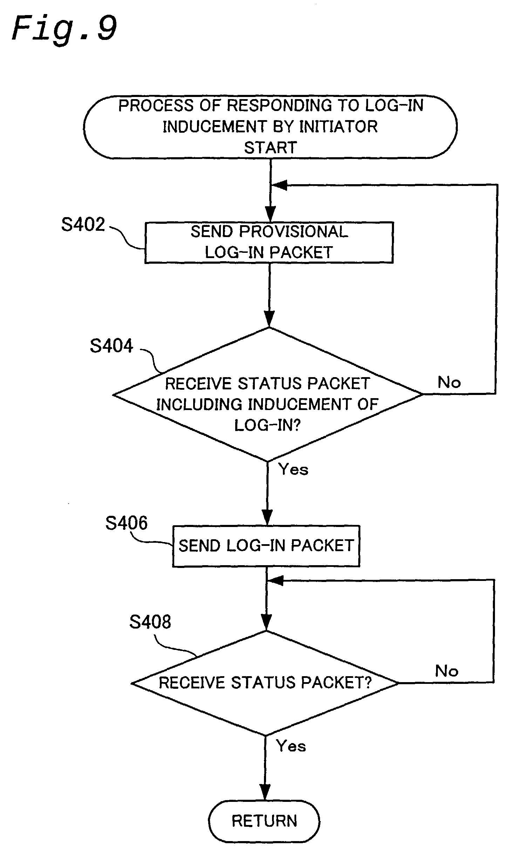

Fig. 8 is a flowchart showing a processing routine of log-in inducement executed by the target shown in Fig. 7. Fig. 9 is a flowchart showing a processing routine of responding to the log-in inducement executed by the initiator shown in Fig. 7.

When the controller 11' of the initiator 10A starts the processing routine shown in the flowchart of Fig. 9, the provisional log-in unit 11b of the controller 11' first sends a provisional log-in packet to the logical unit LUN0 of the target 20A at step S402. The provisional log-in packet has a similar structure to that of the ordinary log-in packet, and includes a request of log-in to the logical unit LUN0 of the target 20A and the GUID of the initiator 10A. The request of log-in included in the provisional log-in packet is, however, different from the ordinary request of log-in that is given to gain a service from the logical unit but is a request of provisional log-in that is given to receive a status from the logical unit LUN0.

The provisional log-in unit 11b of the controller 11' continually sends the provisional log-in packet at regular time intervals, for example, at a rate of once per 2 seconds, until the controller 11' receives a status packet including an inducement of log-in from the target 20A.

Referring to the flowchart of Fig. 8, the management agent ME0 included in the logical unit LUN0 of the target 20A, on the other hand, determines whether or not the target 20A receives the provisional log-in packet sent from each initiator at the regular time intervals at step S302. When receiving the provisional log-in packet, the management agent ME0 reads the GUID included in the input provisional log-in packet at step S304.

In the case where a command like "Send To Computer A" or "Receive From Computer A" discussed above has already been sent from the upper layer protocol to the lower layer protocol, SBP-2, via the SPI in the printer 'a', the management agent ME0 of the target 20A determines, in response to the command, at step S306 that it is necessary to carry out a series of connectionless transactions starting from the target 20A, and goes to step S308. The series of connectionless transactions is accompanied with an inducement of log-in and is carried out between the target 20A and the initiator 10A or the computer A, which is specified as the partner of communication. In the case where no such command has yet been sent, on the other hand, the management agent ME0 determines at step S306 that it is not necessary to carry out the series of connectionless transactions, and goes to step S318.

At step S308, the management agent ME0 compares the GUID read at step S304 with the GUID of the initiator of interest, which is the partner of communication specified by the transmitted command, for the purpose of identification. At this moment, the partner of communication specified by the transmitted command is the computer A, that is, the initiator 10A. It is accordingly determined at step S308 whether or not the GUID read at step S304 is coincident with the GUID '10A' of the initiator 10A. In the case where the read GUID is not coincident with the GUID of the initiator of interest, the program proceeds to step S318.

At step S318, the management agent ME0 specifies the initiator that has given the request of provisional log-in, based on the GUID read at step S304, and sends a status packet, which is set to a log-in error status, to the specified initiator. The log-in error status represents a response of failed log-in. The management agent ME0 subsequently repeats the processing of and after step S302 with regard to other provisional log-in packets sent from the respective initiators.

In the case where the read GUID is coincident with the GUID of the initiator of interest, that is, the GUID '10A' of the initiator 10A, at step S308, on the other hand, the log-in inducement unit ME0a included in the management agent ME0 sends a status packet, which is set to a status of information representing an inducement of log-in, to the initiator 10A at step S310. Here the 'log-in' to be induced is not the provisional log-in to the auxiliary logical unit LUN0 but the log-in to the ordinary logical unit that provides the normal service. When the logical unit LUN1 desires a log-in from the initiator 10A, for example, the log-in inducement unit ME0a of the management agent ME0 specifies an inducement of log-in and the number allocated to the logical unit to be logged in as the information representing the inducement of log-in. When the number #1 is allocated to the logical unit LUN1, for example, the log-in inducement unit ME0a sends the status packet, which is set to a status "Please Log-in To Me with LUN#1".

Referring back to the flowchart of Fig. 9, after sending the provisional log-in packet at step S402, the provisional log-in unit 11b included in the controller 11' of the initiator 10A stands by for the input of a status packet. When receiving a status packet from the target 20A, the provisional log-in unit 11b reads the status set in the input status packet and determines whether or not the status set in the input status packet is the information representing the inducement of log-in at step S404. In the event that the status set in the input status packet is not the information representing the inducement of log-in but the log-in error status, which represents the failed log-in, the provisional log-in unit 11b of the controller 11' again carries out the processing of step S402 to send another request of provisional log-in to the logical unit LUN0 of the target 20A.

In the event that the status set in the input status packet is the information representing the inducement of log-in, on the other hand, the provisional log-in unit 11b of the controller 11' determines that the initiator 10A receives the inducement of log-in from the target 20A, and reads the number allocated to the logical unit from the information representing the inducement of log-in. Since the information includes the allocated number #1 of the logical unit LUN1, the controller 11' recognizes the logical unit LUN1 as the logical unit to be logged in. The log-in unit 11a of the controller 11' then sends a normal log-in packet to the logical unit LUN1, in order to log in the logical unit LUN1 of the target 20A at step S406. The normal log-in packet includes a request of log-in for requiring the logical unit LUN1 to accept a log-in and the GUID of the initiator 10A.

In the target 20A, after the management agent ME0 included in the logical unit LUN0 of the target 20A sends the status packet including an inducement of log-in, the main part of the processing shifts from the management agent ME0 of the logical unit LUN0 to the management agent ME1 of the logical unit LUN1. Referring back to the flowchart of Fig. 8, the management agent ME1 stands by for the input of a log-in packet at step S312. When receiving a log-in packet, the management agent ME1 reads the GUID included in the input log-in packet at step S314 and specifies the initiator that has just sent the log-in packet, based on the read GUID, so as to confirm that the specified initiator is coincident with the initiator that has given the inducement of log-in.

The management agent ME1 then sends a status packet, which is set to a log-in successful status, to the initiator 10A that has given the request of log-in at step S316. The log-in successful status represents the response of accepted log-in as mentioned previously in the first embodiment. After the management agent ME1 sends the status packet, the program exits from the processing routine shown in the flowchart of Fig. 8.

Referring back to the flowchart of Fig. 9, after sending the log-in packet at step S406, the controller 11' of the initiator 10A stands by for the input of a status packet at step S408. When receiving a status packet from the logical unit LUN1 of the target 20A, the controller 11' reads the status specified in the input status packet and confirms that the input packet is set to the log-in successful status, which represents the accepted log-in. The program then exits from the processing routine shown in the flowchart of Fig. 9.

The series of the processing discussed above causes the target 20A to be logged in by the initiator 10A. 3-3. Effects of Second Embodiment

As described above, in the technique of the second embodiment, the target 20A induces the initiator 10A to log in. When the initiator 10A logs in the target 20A, the target 20A starts sending or receiving data to or from the initiator 10A. The arrangement of the second embodiment thus enables data transmission starting from the target 20A by the series of connectionless transactions and ensures the symmetry of communication.

In the structure of the second embodiment, the target 20A has the auxiliary logical unit LUN0 that is used for the inducement of log-in. The respective initiators give the request of provisional log-in to the logical unit LUN0 at regular intervals. The logical unit LUN0 returns the status in response to each request of provisional log-in. When the target 20A desires a log-in from the initiator 10A, the target 20A sends the status packet, which is set to the status of information including an inducement of log-in and the number allocated to the logical unit LUN1 to be logged in, to the initiator 10A. This arrangement enables the initiator 10A to readily and securely recognize the action of the target 20A that induces a log-in to the logical unit LUN1.

### 4. Third Embodiment

### 4-1. Structure of Third Embodiment

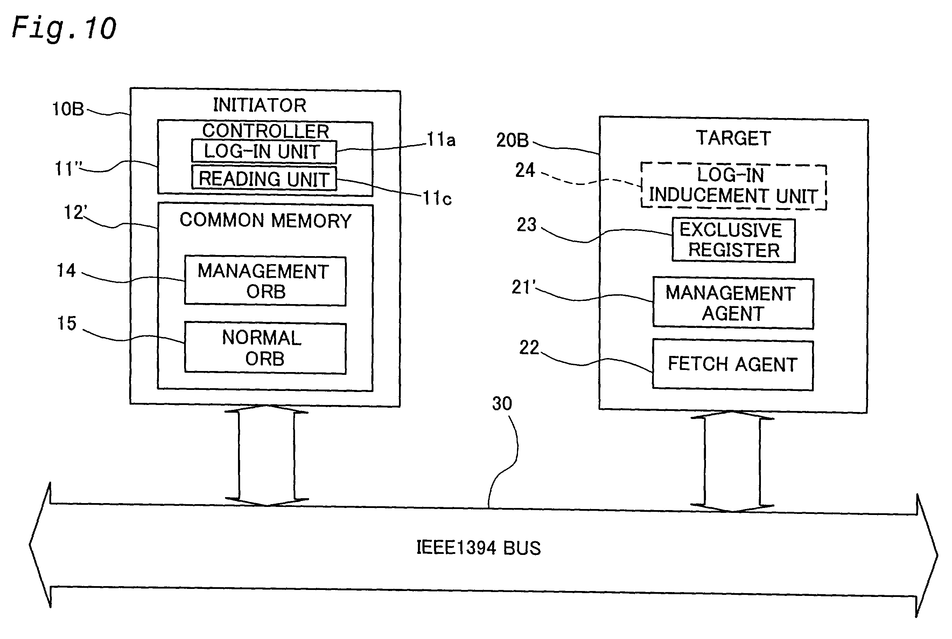

Fig. 10 is a block diagram illustrating the structure of an initiator and a target in a third embodiment according to the present invention. The like numerals in Fig. 10 denote the like elements shown in Figs. 1 and 7. Unlike the controller 11' included in the initiator 10A shown in Fig. 7, a controller 11'' included in an initiator 10B of the third embodiment has a reading unit 11c, in place of the provisional log-in unit 11b.

As shown in Fig. 10, a target 20B of the third embodiment includes an exclusive register 23 that is used when the target 20B induces an initiator to log in, in addition to a management agent 21' and the fetch agent 22. The management agent 21' is similar to the management agent 21 included in the target 20 of the first embodiment but does not include the log-in inducement unit 21a. The target 20B also includes a log-in inducement unit 24, which is constructed by an upper layer driver or application. As described previously in the first embodiment, the target actually includes at least one logical unit, and the management agent and the fetch agent are provided for each logical unit. For the clarity of explanation, however, the logical units are omitted from the illustrated structure of the third embodiment, like the first embodiment shown in Fig. 1.

### 4-2. Operation of Third Embodiment

The operation of the third embodiment is carried out on the same premises as those of the first embodiment shown in Fig. 1 and the second embodiment shown in Fig. 7. In the third embodiment, the target 20B is a printer 'a' and the initiator 10B is a computer A. The printer 'a' functioning as the target 20B makes connectionless communication with each computer functioning as the initiator, in order to find a specific computer that provides a service of downloading a font.

In the arrangement of the third embodiment, the respective initiators including the initiator 10B read the contents of the exclusive register 23 included in the target 20B at preset time intervals.

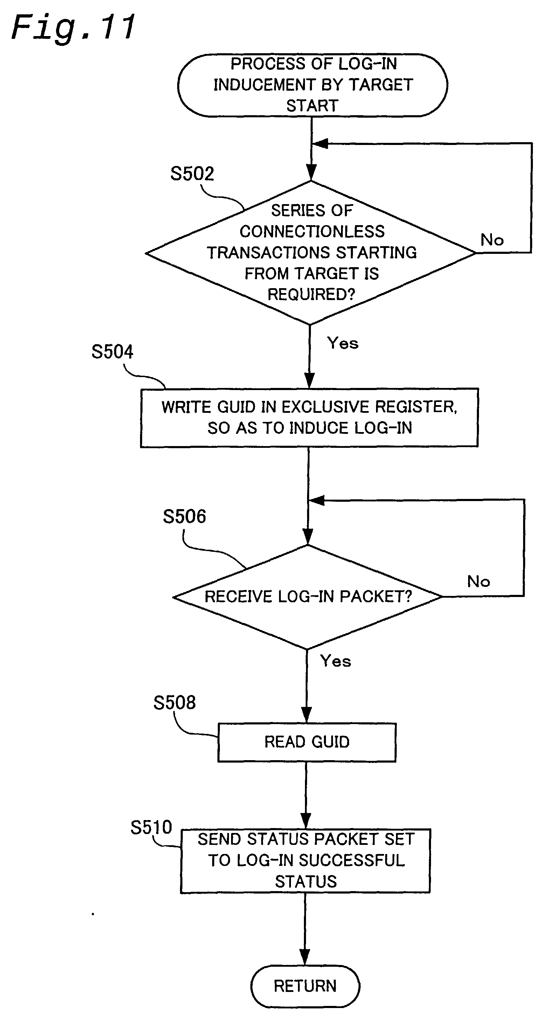

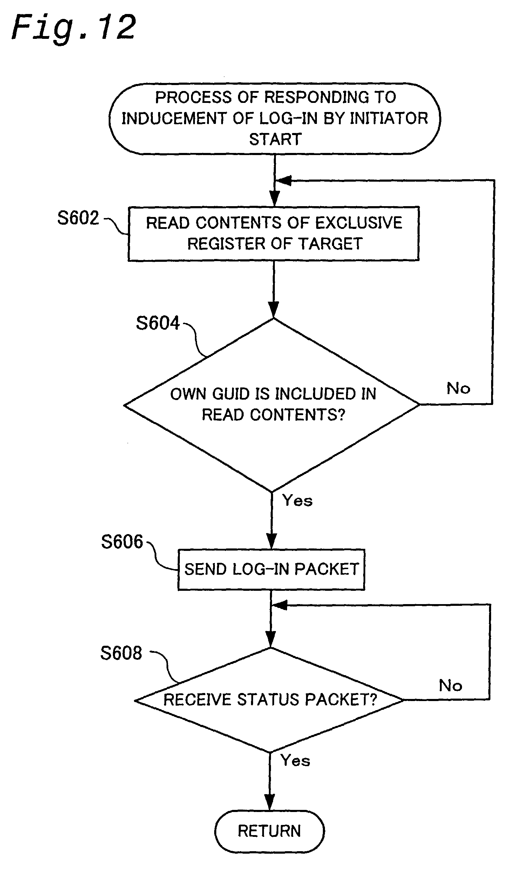

Fig. 11 is a flowchart showing a processing routine of log-in inducement executed by the target shown in Fig. 10. Fig. 12 is a flowchart showing a processing routine of responding to the log-in inducement executed by the initiator shown in Fig. 10.

When the controller 11'' of the initiator 10B starts the processing routine shown in the flowchart of Fig. 12, the reading unit 11c of the controller 11'' first gains access to the target 20B via the IEEE1394 bus 30 and reads the contents of the exclusive register 23 included in the target 20B by a transaction of the IEEE1394 bus 30 at step S602. The controller 11'' then determines whether or not the read contents of the exclusive register 23 include its own GUID, that is, the GUID '10B' of the initiator 10B, at step S604. In the case where the read contents do not include the GUID of the initiator 10B, the reading unit 11c of the controller 11'' carries out the processing of step S602 again after elapse of a preset time interval. In this manner, the reading unit 11c of the controller 11'' repeatedly reads the contents of the exclusive register 23 at the preset time intervals until the controller 11'' detects the own GUID in the contents of the exclusive register 23.

Referring to the flowchart of Fig. 11, in the case where a command like "Send To Computer A" or "Receive From Computer A" discussed above has already been sent from the upper layer protocol to the lower layer protocol, SBP-2, via the SPI in the printer 'a', the target 20B determines, in response to the command, at step S502 that it is necessary to carry out a series of connectionless transactions starting from the target 20B. The series of connectionless transactions is accompanied with an inducement of log-in and is carried out between the target 20B and the initiator 10B or the computer A, which is specified as the partner of communication. The log-in inducement unit 24, which is the upper layer driver or application in the target 20B, writes the GUID '10B' of the initiator 10B, which is the object of the log-in inducement, in the exclusive register 23, so as to induce the initiator 10B to log in at step S504.

As described previously, the reading unit 11c of the controller 11'' included in the initiator 10B reads the contents of the exclusive register 23 included in the target 20B at step S602 in the flowchart of Fig. 12. At this moment, the reading unit lie finds the own GUID '10B' of the initiator 10B in the read contents of the exclusive register 23. The controller 11'' accordingly determines at step S604 that the own GUID is included in the read contents and thereby recognizes an inducement of log-in from the target 20B.

In response to the inducement of log-in from the target 20B, the initiator 10B carries out the processing of steps S606 and S608 in the flowchart of Fig. 12, which is identical with the processing of steps S206 and S208 shown in the flowchart of Fig. 5 and executed by the initiator 10 of the first embodiment. The target 20B, on the other hand, carries out the processing of steps S506 through S510 in the flowchart of Fig. 11, which is identical with the processing of steps S106 through S110 shown in the flowchart of Fig. 4 and executed by the target 20 of the first embodiment.

### 4-3. Effects of Third Embodiment

As described above, like the first and the second embodiments shown in Figs. 1 and 7, in the technique of the third embodiment, the target 20B induces the initiator 10B to log in. When the initiator 10B logs in the target 20B, the target 20B starts sending or receiving data to or from the initiator 10B. The arrangement of the third embodiment thus enables data transmission starting from the target 20B by the series of connectionless transactions and ensures the symmetry of communication.

In the structure of the third embodiment, the target 20B has the exclusive register 23 used for the inducement of log-in. The respective initiators read the contents of the exclusive register 23 at regular intervals. The target 20B writes the GUID of the initiator 10B, which is the object of the log-in inducement, in the exclusive register 23, so as to induce the initiator 10B to log in. The initiator 10B then reads the contents of the exclusive register 23. This arrangement enables the initiator 10B to readily and securely recognize the action of the target 20B that induces a log-in.

### 5. Other Applications

The present invention is not restricted to the above embodiments or their modifications, but there may be many other modifications, changes, and alterations without departing from the scope or spirit of the main characteristics of the present invention.

In the first embodiment discussed above, the target 20 writes its own GUID in the log-in inducement register 13 of the initiator 10, so as to induce a log-in. One modified application utilizes a lower-most one bit in the log-in inducement register 13 to inform the initiator 10 of the type of the log-in inducement, that is, either the inducement of log-in with the specification of the command "Send To" or the inducement of log-in with the specification of the command "Receive From". In the case where the target 20 sets the lower-most one bit in the log-in inducement register 13, the initiator 10 recognizes the inducement of log-in with the specification of the command "Send To" and sets the normal ORB 15 to the input mode. In the case where the target 20 clears the lower-most one bit in the log-in inducement register 13, on the contrary; the initiator 10 recognizes the inducement of log-in with the specification of the command "Receive From" and sets the normal ORB 15 to the output mode. In this manner, the initiator 10 switches the mode of the normal ORB 15 and thereby attains the efficient data transmission.

In the firs and the third embodiments discussed above, the logical units, which are actually included in the target, are omitted from the explanation. In these embodiments, the logical unit, which requires a certain initiator to log in, may be specified in the process of the inducement of log-in. In the first embodiment, the target 20 writes the number allocated to the logical unit, which is to be logged in, together with its own GUID in the log-in inducement register 13 of the initiator 10. In the third embodiment, the target 20B writes the number allocated to the logical unit, which is to be logged in, together with the GUID of the initiator, which is the object of the log-in inducement, in the exclusive register 23.

In the embodiments discussed above, five initiators and one target are connected to the IEEE1394 bus 30 as shown in Fig. 2. The technique of the present invention is, however, not restricted to such numbers. In the case where two or more targets are connected to the IEEE1394 bus 30, the series of the processing discussed above is executed by each target.

In the embodiments discussed above, the initiators are the computers and the target is the printer. The technique of the present invention is, however, not restricted to such devices. The initiator may be a scanner or any suitable device other than the computer. The target may also be any suitable device other than the printer. In one example, an interface switching device may be set to the target. In this case, the target only plays the role of switching between the IEEE1394 bus and an existing interface, which is connected with a scanner or a printer.

The scope and spirit of the present invention are limited only by the terms of the appended claims.

## Claims

1. A log-in device that logs in a specific device via a predetermined communication path, said log-in device comprising:
a log-in unit that logs in said specific device in response to an inducement of log-in from said specific device.

2. A log-in device in accordance with claim 1, said log-in device further comprising:
a log-in inducement register,
wherein said log-in unit determines that said log-in device has received the inducement of log-in from said specific device when predetermined information is written into said log-in inducement register by said specific device.

3. A log-in device in accordance with claim 2, wherein the predetermined information includes an identification code of said specific device.

4. A log-in device in accordance with claim 1, said log-in device further comprising:
a provisional log-in unit that outputs a request of provisional log-in to a specific logical unit included in said specific device in a regular manner or in an irregular manner and receives a response to the request of provisional log-in from said specific logical unit,
wherein said log-in unit determines that said log-in device has received the inducement of log-in from said specific device when the response received by said provisional log-in unit includes predetermined information.

5. A log-in device in accordance with claim 1, said log-in device further comprising:
a register reading unit that reads contents of a specific register included in said specific device in a regular manner or in an irregular manner,
wherein said log-in unit determines that said log-in device has received the inducement of log-in from said specific device when the contents of said specific register read by said register reading unit include predetermined information.

6. A log-in device in accordance with claim 5, wherein the predetermined information includes an identification code of said log-in device.

7. A log-in device in accordance with any one of claims 1 through 6, wherein said predetermined communication path comprises an IEEE1394 bus, and said log-in device communicates with said specific device according to an SBP-2 protocol.

8. A logged-in device that is logged in by a specific device via a predetermined communication path, said logged-in device comprising:
a log-in inducement unit that induces said specific device to log in when desiring a log-in from said specific device.

9. A logged-in device in accordance with claim 8, wherein said log-in inducement unit induces the log-in by writing predetermined information into a specific register included in said specific device.

10. A logged-in device in accordance with claim 9, wherein the predetermined information includes an identification code of said logged-in device.

11. A logged-in device in accordance with claim 8, said logged-in device further comprising:
a specific logical unit that receives a request of provisional log-in from said specific device in a regular manner or in an irregular manner and sends a response to the request of provisional log-in to said specific device,
wherein said log-in inducement unit induces the log-in by making predetermined information included in the response sent by said specific logical unit.

12. A logged-in device in accordance with claim 8, said logged-in device further comprising:
a specific register having contents read by said specific device in a regular manner or in an irregular manner,
wherein said log-in inducement unit induces the log-in by writing predetermined information into said specific register.

13. A logged-in device in accordance with claim 12, wherein the predetermined information includes an identification code of said specific device.

14. A logged-in device in accordance with any one of claims 8 through 13, wherein said predetermined communication path comprises an IEEE1394 bus, and said logged-in device communicates with said specific device according to an SBP-2 protocol.

15. An inter-device communication system, where a log-in device logs in a logged-in device via a predetermined communication path,
wherein said logged-in device comprises a log-in inducement unit that induces said log-in device to log in when desiring a log-in from said log-in device, and
said log-in device comprises a log-in unit that logs in said logged-in device in response to the inducement of log-in from said logged-in device.

16. A method of controlling log-in, so as to cause a log-in device to log in a logged-in device via a predetermined communication path, said method comprising the steps of:
(a) causing said logged-in device to induce said log-in device to log in when desiring a log-in from said log-in device; and
(b) causing said log-in device to log in said logged-in device in response to the inducement of log-in from said logged-in device.

17. A computer program product that causes a computer to carry out a series of log-in processing, said computer logging in a specific device via a predetermined communication path, said computer program product comprising:
a program code that causes said computer to log in said specific device in response to an inducement of log-in from said specific device; and
a computer readable medium, in which said program code is stored.

18. A computer program product that causes a computer to carry out a series of logged-in processing, said computer being logged in by a specific device via a predetermined communication path, said computer program product comprising:
a program code that causes said computer to induce said specific device to log in when desiring a log-in from said specific device; and
a computer readable medium, in which said program code is stored.

19. A data signal embodied in a carrier, said data signal representing a computer program that causes a computer to carry out a series of log-in processing, said computer logging in a specific device via a predetermined communication path, said data signal comprising:
a program code that causes said computer to log in said specific device in response to an inducement of log-in from said specific device.

20. A data signal embodied in a carrier, said data signal representing a computer program that causes a computer to carry out a series of logged-in processing, said computer being logged in by a specific device via a predetermined communication path, said data signal comprising:
a program code that causes said computer to induce said specific device to log in when desiring a log-in from said specific device.

21. A computer program that causes a computer to carry out a series of log-in processing, said computer logging in a specific device via a predetermined communication path, said computer program comprising:
a program code that causes said computer to log in said specific device in response to an inducement of log-in from said specific device.

22. A computer program that causes a computer to carry out a series of logged-in processing, said computer being logged in by a specific device via a predetermined communication path, said computer program comprising:
a program code that causes said computer to induce said specific device to log in when desiring a log-in from said specific device.
